# EUROPÄISCHE PATENTSCHRIFT

(11) **EP 2 956 981 B1**
(45) Veröffentlichungstag und Bekanntmachung des Hinweises auf die Patenterteilung: **01.11.2017**
(21) Anmeldenummer: 14707711.9
(22) Anmeldetag: 24.02.2014
(51) Int. Cl.: H01M 8/1213, H01M 4/86, H01M 4/90, H01M 12/06, H01M 8/0232, H01M 12/08, H01M 8/0245

(54) **ENERGIEWANDLERZELLE MIT ELEKTROCHEMISCHER WANDLEREINHEIT**
ENERGY CONVERSION CELL COMPRISING AN ELECTROCHEMICAL CONVERSION UNIT
ÉLÉMENT DE CONVERSION D'ÉNERGIE COMPORTANT UNE UNITÉ DE CONVERSION ÉLECTROCHIMIQUE

(30) Priorität: 27.03.2013 DE 102013205407
(43) Veröffentlichungstag der Anmeldung: 23.12.2015
(73) Patentinhaber: Siemens Aktiengesellschaft, 80333 München (DE)
(72) Erfinder: BENKERT, Katrin, 90571 Schwaig (DE); KOSSE, Sylvio, 91052 Erlangen (DE); SOLLER, Thomas, 94469 Deggendorf (DE)
(86) Internationale Anmeldenummer: PCT/EP2014/053523
(87) Internationale Veröffentlichungsnummer: WO 2014/154406

(56) Entgegenhaltungen:
- WO-A1-2013/104615
- US-A1- 2012 058 396
- US-A1- 2012 270 088

## Beschreibung

Wiederaufladebare Festelektrolyt-Metall-Luft-Batterien aber auch Brennstoffzellen des Typs SOFC weisen keramische Grundelemente wie eine Zirkonoxid-Elektrolytschicht sowie Oxidkeramiken als Kathoden und Anoden bzw. als positive oder negative Elektroden auf. Der Verbund aus oxidkeramischen Elektroden sowie Festkörperelektrolyten wird dabei als sogenannte Membran-Elektroden-Einheiten (englisch: membrane electrode assembly, MEA) bezeichnet und ermöglicht die Umwandlung von elektrische in chemischer Energie sowie umgekehrt. Zur Speicherung der Energie dient in der genannten Festelektrolyt-Metall-Luft-Batterie ein Redoxpaar aus Metall und Metalloxid wie beispielsweise Eisen und Eisenoxid in verschiedenen Oxidationsstufen bzw. Nickel und Nickeloxid. Hierbei wird der Sauerstoff über ein gasförmiges Redoxpaar, im einfachsten Fall H₂/H₂0, von der negativen Elektrode zur Oberfläche des Speichermediums gebracht. Ein grundlegendes Problem solcher beschriebener Batterien aber auch in anderen Energiewandlerzellen, die auf der eher spröde oxidkeramische MEA Strukturen zurückgreifen, stellt sich jeweils die elektrische Kontaktierung dieser MEAs dar, da die oxidkeramische Elektrolytschicht nur geringe Leit-und Stromtragfähigkeiten besitzt. Zudem sind derartige MEA Strukturen relativ spröde, wobei es beim Zusammenbau von mehreren Energiewandlerzellen zu Stacks bei kleinen Fertigungstoleranzen zu hohen inneren Spannungen in der MEA kommen kann. Der beschriebene Aufbau ist bezüglich seiner elektrischen Eigenschaften jedoch nur im zusammengebauten Zustand elektrisch prüfbar.

Die Aufgabe der Erfindung besteht darin, eine Energiewandlerzelle, insbesondere eine Energiespeicherzelle bereitzustellen, die gegenüber dem Stand der Technik einen reduzierten Fertigungsaufwand aufweist, wobei eine lastfreie Montage der MEA möglich ist, die wiederum vor der Montage auf ihre elektrischen Eigenschaften geprüft werden kann.

Die Lösung der Aufgabe besteht in einer Energiewandlerzelle mit einer elektrochemischen Wandlereinheit nach Anspruch 1.

Die erfindungsgemäße Energiewandlerzelle mit einer elektrochemischen Wandlereinheit weist eine elektrisch positive Seite mit einer Prozessgaszufuhr sowie einer elektrisch negativen Seite auf. Zwischen den beiden Seiten ist die elektromechanische Wandlereinheit angeordnet. Diese elektrochemische Wandlereinheit weist ein selbsttragendes Substrat und mehrere funktionale Schichten auf. Die Wandlereinheit zeichnet sich dadurch aus, dass sie eine positive Elektrode und negative Elektrode aufweist und dass die negative Elektrode ein poröses, metallisches selbsttragendes Substrat umfasst.

Die hier beschriebene Wandlereinheit geht in ihren Grundzügen auf die bereits beschriebene Membranelektrodeneinheit (MEA) zurück, sie unterscheidet sich von üblichen MEAs jedoch im Wesentlichen darin, dass das selbsttragende Substrat, das auch eine MEA aufweist, in diesem Fall durch einen porösen, metallischen, selbsttragenden Körper gebildet wird. Als Material hierfür hat sich insbesondere eine Eisenbasislegierung oder eine Nickelbasislegierung als zweckmäßig erwiesen. Andere Legierungen die entsprechend temperatur- und oxidationsbeständig sind können ebenfalls eingesetzt werden. Hierbei handelt es sich um eine tragende Struktur, also ein selbsttragendes Substrat, das gleichzeitig elektrisch leitfähig ist, was dazu führt, dass eine Kontaktierung der MEA, wie dies im Stand der Technik notwendig ist, entfällt. Die Elektronen werden durch das poröse metallische selbsttragende Substrat lateral abgeführt und seitlich durch eine laterale Stromableitung in einen Stromkreis eingeführt. Es handelt sich hierbei also um eine Integration der Stromableitung in eine Membran-Elektroden-Einheit.

Die elektrochemische Wandlereinheit weist, anders als eine herkömmliche MEA, somit gleichzeitig eine integrierte Kontaktierung auf, so dass auch vor dem Zusammenbau der gesamten Energiewandlerzelle die Kontaktierungsgüte und die elektrischen Eigenschaften der Wandlereinheit getestet werden kann. Da die Kontaktierung in diesem Aufbau nicht durch unflexible Gehäuseteile der Energiewandlerzelle erfolgen muss, ist ferner eine lastfreie Montage der Wandlereinheit möglich. Zudem wird die Sprödigkeit der Wandlereinheit gegenüber einer herkömmlichen MEA insofern reduziert, dass als tragendes Substrat für die weiteren funktionalen Schichten ein metallisches Substrat anwendbar ist, dass gegenüber den herkömmlichen keramischen orientierten Substraten eine höhere Duktilität aufweist.

In einer weiteren Ausgestaltungsform der Erfindung weist die positive Elektrode eine Kontaktschicht auf, mit der Kontakt zu einer selbsttragenden elektrisch leitfähigen Schicht hergestellt wird. Es hat sich als zweckmäßig herausgestellt, dass nicht nur die negative Elektrode ein selbsttragendes Substrat umfasst sondern dass dies auch dann einen Vorteil bringt, wenn die positive Elektrode eine selbsttragende Schicht, die monolithisch beispielsweise in Form eines Blechs ausgestaltet sein kann, die aber auch ebenfalls wie bei der negativen Elektrode in Form eines porösen metallischen Materials ausgestaltet sein kann, versehen ist. Somit kann auch über die positive Elektrode ein lateraler Abfluss der Elektronen erfolgen, wobei die Kontaktierung mit dem Stromkreis seitlich von der flächig ausgestalteten Wandlereinheit erfolgen kann.

Dabei kann es zweckmäßig sein, dass die selbsttragende elektrische leitfähige Schicht der positiven Elektrode mit einer zusätzlichen Schutzschicht gegen Oxidation versehen ist. Ferner ist es zweckmäßig, dass das selbsttragende Substrat der negativen Elektrode und die funktionalen Schichten sowie ggf. die selbsttragende Schicht der positiven Elektrode stoffschlüssig miteinander verbunden sind. Somit bilden die Substrate um die erwähnten Schichten eine geschlossene, stoffschlüssige Einheit, die grundsätzlich vor dem Einbau in eine Energiewandlerzelle auf elektrische und mechanische Fähigkeiten geprüft werden kann.

Die elektrochemische Wandlereinheit weist bevorzugt einen Schichtverbund auf, der wie folgt ausgestaltet ist. Auf dem porösen metallischen selbsttragenden Substrat sind folgende funktionale Schichten in der angegebenen Reihenfolge angeordnet: Zunächst folgt eine Funktionsschicht der negativen Elektrode, einer Elektrolytschicht, insbesondere einen Festkörperelektrolyten beispielsweise auf Basis von yttriumverstärkten Zirkonoxid, darauf folgt eine Funktionsschicht der positiven Elektrode sowie die Kontaktschicht und anschließend die selbsttragende elektrische Schicht der positiven Elektrode die, wie bereits erwähnt, in Form eines Bleches, eines Netzes oder auch in Form eines porösen Substrats analog des Substrats in der negativen Elektrode ausgestaltet sein kann. Zwischen der Elektrolytschicht und der Funktionsschicht der positiven Elektrode ist auch noch eine Diffusionssperrschicht angeordnet die verhindert, dass Ionen aus der Elektrolytschicht in die Funktionsschicht der positiven Elektrode diffundieren. Die aufgezählte Reihenfolge der Schichten stellt eine vorteilhafte Ausgestaltungsform dar, es können jedoch noch weitere funktionale Schichten, die hier nicht erwähnt sind, zweckmäßig sein. Die Aufzählung hat somit keinen Anspruch auf Vollständigkeit.

Es hat sich ferner als zweckmäßig herausgestellt, dass ein Mehrlagenstapel, der durch das selbsttragende Substrat sowie durch die funktionalen Schichten und ggf. durch die elektrisch leitfähige selbsttragende Schicht der positiven Elektrode gebildet wird und der wesentlicher Bestandteil der Einheit ist, eine zumindest teilweise umlaufende Nut aufweist, in die bei einer Montage der Wandlereinheit eine Dichtung eingelegt werden kann, die über die beschriebene Nut hinaus übersteht. Diese ist in einer weiteren Nut der Energiewandlerzelle in einer Interkonnektorplatte gelagert, somit wird eine mechanische Belastung der Wandlereinheit reduziert wird.

Weitere vorteilhafte Ausgestaltungsformen sowie weitere Merkmale der Erfindung werden anhand der folgenden Figuren näher beschrieben, gleiche Merkmale in unterschiedlichen Ausgestaltungsformen werden dabei mit denselben Bezugszeichen versehen. Merkmale aus dem Stand der Technik, die dieselbe Bezeichnung tragen, werden mit demselben Bezugszeichen wie zur Beschreibung der Erfindung versehen, diesen Bezugszeichen wird ein zusätzlicher Strich angehängt.

Dabei zeigen:
Figur 1 den schematischen Aufbau einer Festelektrolyt-Metall-Luft-Batterie,
Figur 2 eine elektrochemische Wandlereinheit,
Figur 3 eine elektrochemische Wandlereinheit,
Figur 4 eine Energiewandlerzelle mit einer elektrochemischen Wandlereinheit in Einbaulauge und
Figur 5 eine vergrößerte Darstellung des Ausschnittes V in Figur 4.

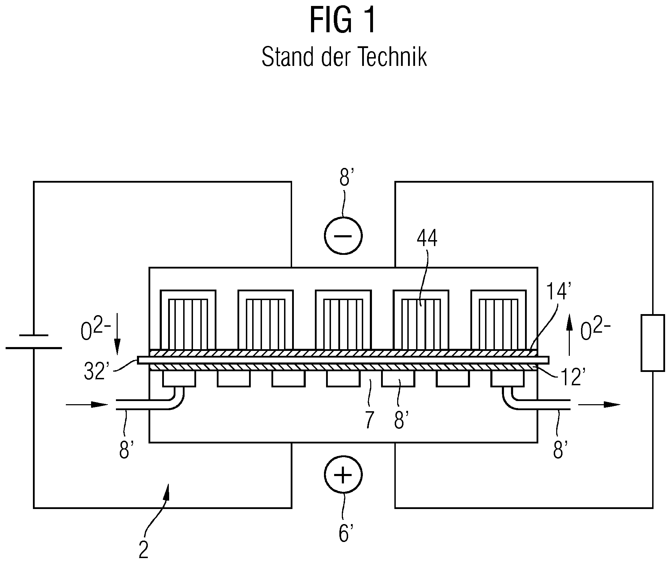

Anhand von Figur 1 (die zum Stand der Technik gehört) soll zunächst schematisch die Wirkungsweise einer Festelektrolyt-Metall-Luft-Batterie (auch Rechargeable Oxide Batterie (ROB)) beschrieben werden, insoweit dies für die vorliegende Beschreibung der Erfindung notwendig ist. Ein üblicher Aufbau einer ROB besteht darin, dass an einer positiven Elektrode 12', die auch als Luftelektrode bezeichnet wird, ein Prozessgas, insbesondere Luft, über eine Gaszufuhr 8' eingeblasen wird, wobei beim Entladen (Stromkreis auf der rechten Bildseite) der Luft Sauerstoff entzogen wird. Der Sauerstoff gelangt in Form von Sauerstoffionen O²⁻ durch einen an der positiven Elektrode anliegenden Feststoffelektrolyten 32' (Elektrolytschicht), zu einer negativen Elektrode 14'. Diese steht über ein gasförmiges Redoxpaar, z.B. ein Wasserstoff-Wasserdampf-Gemisch mit dem porösen Speichermedium in Verbindung. Würde an der negativen Elektrode 14' eine dichte Schicht des aktiven Speichermaterials vorliegen, so würde die Ladekapazität der Batterie schnell erschöpft werden.

Aus diesem Grund ist es zweckmäßig, an der negativen Elektrode als Energiespeichermedium eine Speicherstruktur 2 aus porösem Material einzusetzen, das ein funktional wirkendes oxidierbares Material als ein Speichermedium 44', bevorzugt in Form von Eisen und Eisenoxid enthält.

Über ein, beim Betriebszustand der Batterie gasförmiges Redoxpaar, beispielsweise H₂/H₂O, werden die, durch den Festkörperelektrolyten 32' transportierten Sauerstoffionen nach ihrer Entladung an der negativen Elektrode in Form von Wasserdampf durch Porenkanäle des Speichermediums 44', transportiert. Je nachdem, ob ein Entlade- oder Ladevorgang vorliegt, wird das Metall bzw. das Metalloxid (Eisen/Eisenoxid) oxidiert oder reduziert und der hierfür benötigte Sauerstoff durch das gasförmige Redoxpaar H₂/H₂O angeliefert oder zum Festkörperelektrolyten zurück transportiert. Dieser Mechanismus des Sauerstofftransportes über ein Redoxpaar wird als Shuttlemechanismus bezeichnet.

Der Vorteil des Eisens als oxidierbares Material, also als Speichermedium 44', besteht darin, dass es bei seinem Oxidationsprozess in etwa dieselbe Ruhespannung von etwa 1 V aufweist, wie das Redoxpaar H₂/H₂O bei einem Partialdruckverhältnis von 1, andernfalls ergibt sich ein erhöhter Widerstand für den Sauerstofftransport durch die diffundierenden Komponenten dieses Redoxpaares.

Die Diffusion der Sauerstoffionen durch die Elektrolytschicht 32' benötigt eine hohe Betriebstemperatur von 600 bis 800°C der beschriebenen ROB, aber auch für die optimale Zusammensetzung des Redoxpaares H₂/H₂O in Gleichgewicht mit dem Speichermaterial ist dieser Temperaturbereich vorteilhaft. Hierbei ist nicht nur die Struktur der Elektroden 12', 14' und die Elektrolytschicht 32' einer hohen thermischen Belastung ausgesetzt, sondern auch das Speichermedium 44'. Bei den stetigen Zyklen von Oxidation und Reduktion neigt das aktive Speichermaterial dazu, zu versintern, das bedeutet, dass die einzelnen Körner immer mehr miteinander durch Diffusionsprozesse verschmelzen, die reaktive Oberfläche sinkt und die für den Gastransport erforderliche durchgehend offene Porenstruktur verschwindet. Bei einer geschlossenen Porenstruktur kann das Redoxpaar H₂/H₂O die aktive Oberfläche des Speichermedium 44' nicht mehr erreichen, so dass bereits nach einer Teilentladung des Speichers der Innenwiderstand der Batterie sehr hoch wird, was eine weitere technisch sinnvolle Entladung verhindert.

Ein Vorteil der ROB besteht darin, dass sie durch ihre kleinste Einheit, nämlich die Speicherzelle modular nahezu unbegrenzt erweiterbar ist. Somit ist eine kleine Batterie für den stationären Hausgebrauch ebenso darstellbar wie eine großtechnische Anlage zur Speicherung der Energie eines Kraftwerkes.

In Figur 1 ist bezüglich der positiven Elektrode 12', der Elektrolytstruktur 32' und der negativen Elektrode 14' lediglich eine sehr vereinfachte schematische Darstellung angegeben. Üblicherweise handelt es sich hierbei im Stand der Technik um eine Schichtstruktur, die ein keramisches Substrat aufweist, das beispielsweise auf der Basis von yttriumverstärkten Zirkonoxid besteht. Dieses sehr spröde Substrat muss sowohl auf der positiven Seite 6' als auch auf der negativen Seite 8' der Energiewandlerzelle elektrisch kontaktiert werden. Auf der negativen Seite 8' erfolgt die Kontaktierung beispielsweise über ein hier nicht dargestelltes elektrisch leitfähiges Netz, das zwischen der negativen Elektrode 14' und dem Speichermedium 44' eingefügt ist. Auf der positiven Seite 6' erfolgt die Kontaktierung durch Stege 7', die Kanäle der Luftzufuhrvorrichtung 8' voneinander trennen. Bei dieser Kontaktierungsmethode handelt es sich um eine mehrfach statisch unbestimmte mechanische Belastung, die auf die Elektrodenstruktur wirkt, zudem handelt es sich um eine Kontaktierungsstruktur die erst im zusammengebauten Zustand der Energiewandlerzelle, hier im Form der Metall-Luft-Batterie, elektrisch testbar ist.

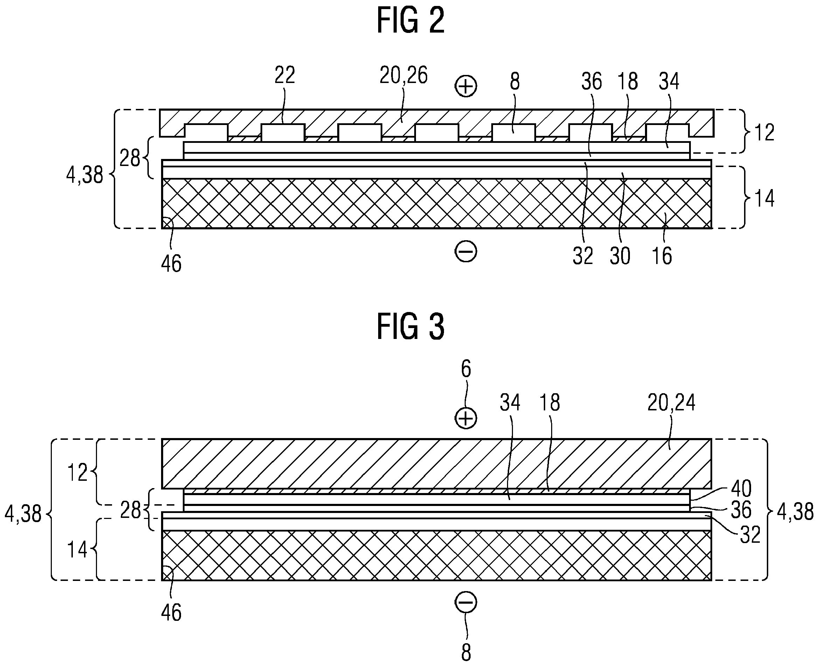

Zur Vermeidung dieser beiden wesentlichen Nachteile wird nach Figur 2 beispielhaft eine elektrochemische Wandlereinheit 4 (im nachfolgenden Wandlereinheit 4 genannt) vorgestellt die als selbsttragendes Substrat 16, das Bestandteil einer negativen Elektrode 14 ist, ein poröses metallisches Gerüst aufweist. Dieses poröse keramische Gerüst das das Substrat 16 bildet, kann beispielsweise in Form eines metallischen Schaumes ausgestaltet sein. Hierbei bietet sich als Material beispielsweise eine Nickelbasislegierung oder Eisenbasislegierung an, die bei den beschriebenen hohen Prozesstemperaturen der Metall-Luft-Batterie weitgehend inert sind.

Auf diesem Substrat 16 ist eine Funktionsschicht 30 der negativen Elektrode 14 aufgebracht. Die Funktionsschicht 30 zusammen mit dem Substrat 16 bildet die negative Elektrode 14. Auf dieser Schicht 30 folgt eine Elektrolytschicht 32, die einen Feststoffelektrolyten auf der Basis von yttriumverstärkten Zirkonoxid enthält. Zur Vermeidung der Diffusion von Ionen aus der Elektrolytschicht ist eine Diffusionssperrschicht 36 vorgesehen, die zwischen der Elektrolytschicht 32 und einer Funktionsschicht 34 der positiven Elektrode 12 angeordnet ist. Auf diese Funktionsschicht 34 der positiven Elektrode 12 ist eine Kontaktschicht 18 aufgebracht, die den Kontakt zu einer selbsttragenden Schicht 20 der positiven Elektrode 12 herstellt. Bei der selbsttragenden Schicht 20 gemäß Figur 2 handelt es sich um eine monolithische metallische Struktur, beispielsweise in Form eines metallischen Blechs. Diese selbsttragende Schicht 20 kann ggf. von einer Schutzschicht 22, die insbesondere als Oxidationsschutzschicht dient, umgeben sein.

Die selbsttragende Schicht 20, ggf. deren Schutzschicht 22, die Kontaktierungsschicht 18 sowie die Funktionsschicht 34 der positiven Elektrode 12 bilden zusammen nach dieser Darstellung die positive Elektrode 12. Bei dieser Ausgestaltungsform ist die selbsttragende Schicht 26 so ausgebildet, dass sich Kanäle bilden, die Teil der Prozessgaszufuhr 8 sind. Durch diese Kanäle gelangt der Sauerstoff an die funktionale Schicht der positiven Elektrode 12 und weiter über die Elektrolytschicht 32 zur negativen Elektrode 14, wie dies bereits einleitend beschrieben ist.

Die Funktionsschicht 34 der positiven Elektrode 12, die Elektrolytschicht 32, die Diffusionsschicht 36 sowie die Funktionsschicht 30 der negativen Elektrode 14 bilden zusammen die bereits erwähnten funktionalen Schichten, die für sich genommen jeweils eine relativ geringe Dicke aufweist, die üblicherweise zwischen 10 µm und 50 µm beträgt. Da diese Schichten für sich nicht selbsttragend sind, sind sie auf das selbsttragende Substrat 16 aufgebracht. Dieses metallische, poröse, elektrisch leitfähige selbsttragende Substrat 16 unterscheidet sich vom Stand der Technik darin, dass dort jeweils ein keramisch basiertes, nicht elektrisch leitfähiges monolithisches Substrat verwendet wird. Durch den beschriebenen Aufbau können die Elektroden flächig durch das Substrat 16 abfließen und durch eine laterale Stromableitung 46 in einen Stromkreis eingespeist werden.

Der Aufbau gemäß Figur 3 unterscheidet sich vom Aufbau nach Figur 2 lediglich darin, dass als selbsttragende Schicht 20 der positiven Elektrode ein poröser metallischer Körper 24 eingesetzt wird, der grundsätzlich ähnliche Eigenschaften wie das Substrat 16 der negativen Elektrode aufweisen kann. Dieser poröse metallische Körper 24 ist anders, als der monolithisch metallische Körper 26 gemäß Figur 2, luftdurchlässig, was dazu führt, dass auf die Kanäle der Luftzufuhr 8 verzichtet werden kann. Der poröse metallische Körper 24 kann somit auf die Kontaktschicht 18 durchgehend aufgebracht werden, Aussparungen in Form von Kanälen sind hier nicht notwendig.

Der in den Figuren 2 und 3 gezeigter schichtförmige Aufbau der einzelnen funktionellen Schichten sowie Substraten, die zusammen die stoffschlüssig verbundene elektrochemische Wandlereinheit 4 bilden, kann auch als Mehrlagenstapel 38 bezeichnet werden. Dieser Mehrlagenstapel 38 kann so ausgestaltet sein, dass verschiedene Schichten, hier exemplarisch dargestellt die Kontaktierungsschicht 18, die Diffusionsschicht 36 sowie die Funktionsschicht 34 der positiven Elektrode 12 ggf. auch Bereiche der selbsttragenden Schicht 20 sowie das Substrat 16 einer kleineren Fläche die mehr Ausdehnung aufweisen als die üblichen Schichten, was dazu führt, dass eine umlaufende Nut 40 entsteht, die insbesondere dazu geeignet ist, dort eine Dichtung 42 einzufügen.

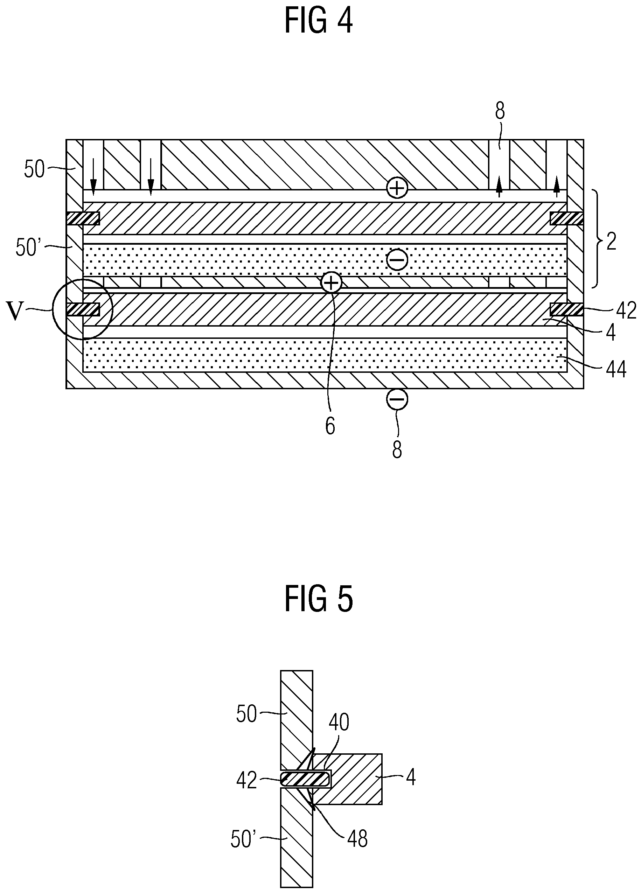

In Figur 4 ist eine Einbaulage eines Mehrlagenstapels 38 aus den Figuren 2 oder 3 in einer Energiewandlerzelle 2, insbesondere einer Zelle einer Metall-Luft-Batterie dargestellt. Diese Zelle 2 weist dabei Gehäuseplatten 50 und 50' (auch Interkonnektorplatten) auf, die entsprechende Aussparungen für die elektrochemische Wandlereinheit 4 aufweisen, ferner sind in diesen Aussparungen auch noch ein Speichermedium 44 untergebracht, wobei auf die genaue Anordnung an dieser Stelle nicht näher eingegangen wird. Es soll jedoch hier auf die Anordnung der Dichtung 42 eingegangen werden, die einerseits zwischen den Gehäuseteilen 50 und 50' der Zelle 2 eingelegt ist, und die wiederrum in die Nut 40 der Wandlereinheit hineinragt. Die Wandlereinheit 4 wird somit durch die in der Nut 40 eingelegte Dichtung 42 getragen, wobei hierbei als vorteilhaft zu erwähnen ist, dass kaum mechanische Spannungen auf die Wandlereinheit 4 wirken, durch die bereits gemäß Figur 2 und 3 beschriebene laterale Kontaktierung 46 mit dem Gehäuseteil 50 und 50', gewährleistet ist. Es kann somit eine weitgehende mechanische Entkopplung der MEA von der Zelle 2 bei gleichzeitig guter Kontaktierung erfolgen. In Figur 5 ist eine vergrößerte Darstellung des Ausschnittes V in Figur 4 gegeben, wo die Anordnung der Dichtung 42 deutlicher zu erkennen ist, wie sie in die Nut 40 der Wandlereinheit 4 hineinragt. Ggf. könnten noch eine Fügestelle 48, beispielsweise eine Schweißnaht oder eine Lotverbindung zwischen der Wandlereinheit 4 und dem Gehäuseteil 50, 50' vorgesehen sein.

Neben der bereits erwähnten separaten Prüffähigkeit der integrierten Wandlereinheit 4, die sich insbesondere auf die Kontaktierungsgüte der Einzelkomponenten bezieht und der lastfreie Montage die zu einer deutlich verbesserten mechanischen Stabilität des Gesamtaufbaus führt, sei auch noch erwähnt, dass durch die beschriebene Zelle und die beschriebene Wandlereinheit 4 der Fertigungsaufwand eines Stacks, der aus verschiedenen Zellen 2 besteht, sehr stark reduziert wird. Dies wiederum führt zu einem deutlich einfacheren Design der Gehäuseteile 50, 50' also den sogenannten Interconnectorplatten. Dadurch wird das Volumen, das für das Speichermedium 44 zur Verfügung steht, vergrößert, was wiederum zu einer höheren Energiedichte sowie der Verringerung der Kosten pro Stack führt.

## Patentansprüche

1. Energiewandlerzelle (2) mit einer elektrochemischen Wandlereinheit (4), wobei die Energiewandlerzelle (2) eine elektrisch positive Seite (6) mit einer Prozessgaszufuhr (8) und eine elektrisch negative Seite (10) umfasst und zwischen den beiden Seiten die elektrochemische Wandlereinheit (4) angeordnet ist, die ein selbsttragendes Substrat und mehrere funktionale Schichten (28) aufweist, **dadurch gekennzeichnet, dass** die elektrochemische Wandlereinheit (4) eine positive Elektrode (12) und eine negative Elektrode (14) aufweist und dass die negative Elektrode (14) ein poröses metallische selbstragendes Substrat (16) umfasst und dass die elektrochemische Wandlereinheit (4) einen Schichtfolgeverbund aufweist, der auf dem porösen metallischen selbstragenden Substrat (16) noch folgende funktionale Schichten (28) in der angegebenen Reihenfolge umfasst: eine Funktionsschicht (30) der negativen Elektrode (14), eine Elektrolytschicht (32), eine Funktionsschicht (34) der positiven Elektrode (12), die Kontaktschicht(18) und die selbsttragende elektrisch leitfähige Schicht (20) der positiven Elektrode (12), wobei zwischen der Elektrolytschicht (32) und er Funktionsschicht (34) der positiven Elektrode (12) eine Diffusionssperrschicht (30) angeordnet ist.

2. Energiewandlerzelle nach Anspruch 1, **dadurch gekennzeichnet, dass** die positive Elektrode (12) eine Kontaktschicht (18) und eine selbsttragende elektrisch leitfähige Schicht (20) umfasst.

3. Energiewandlerzelle nach Anspruch 2, **dadurch gekennzeichnet, dass** die selbsttragende Schicht (20) der positiven Elektrode (12) eine Schutzschicht (22) aufweist,

4. Energiewandlerzelle nach Anspruch 2 oder 3, **dadurch gekennzeichnet, dass** die selbsttragende Schicht (20) der positiven Elektrode (12) einen porösen metallischen Körper (24) umfasst.

5. Energiewandlerzelle nach Anspruch 2 oder 3, **dadurch gekennzeichnet, dass** die selbsttragende Schicht (20) der positiven Elektrode (12) einen flächigen monolithischen metallischen Körper (26) umfasst.

6. Energiewandlerzelle nach einem der vorhergehenden Ansprüchen, **dadurch gekennzeichnet, dass** das selbsttragende Substrat (16) und die funktionalen Schichten (18) stoffschlüssig miteinander verbunden sind.

7. Energiewandlerzelle nach einem der vorhergehenden Ansprüchen, **dadurch gekennzeichnet, dass** das selbsttragende Substrat(16) und die funktionalen Schichten (28) sowie die selbsttragende Schicht (20) zu einem Mehrlagenstapel (38) flächig übereinander angeordnet sind **dadurch gekennzeichnet, dass** der Mehrlagenstapel (38) mindestens teilweise eine umlaufende Nut (40) aufweist.

8. Energiewandlerzelle nach einem der vorhergehenden Ansprüchen, **dadurch gekennzeichnet, dass** das poröse metallische selbstragende Substrat (16) der negativen Elektrode (14) aus einer Eisenbasis-Legierung oder einer Nickelbasis-Legierung besteht.

## Claims

1. An energy conversion cell (2) with an electrochemical conversion unit (4), wherein the energy conversion cell (2) comprises an electrically positive side (6) with a process gas feed (8) and an electrically negative side (10) and the electrochemical conversion unit (4) is disposed between the two sides and comprises a self-supporting substrate and a plurality of functional layers (28), **characterized in that** the electrochemical conversion unit (4) comprises a positive electrode (12) and a negative electrode (14) and that the negative electrode (14) comprises a porous metallic self-supporting substrate (16), and **in that** the electrochemical conversion unit (4) comprises a progressive layer composite, comprising the following functional layers (28) in the stated sequence on the porous metallic self-supporting substrate (16): a functional layer (30) of the negative electrode (14), an electrolyte layer (32), a functional layer (34) of the positive electrode (12), the contact layer(18) and the self-supporting electrically conductive layer (20) of the positive electrode (12), wherein a diffusion barrier layer (30) is disposed between the electrolyte layer (32) and the functional layer (34) of the positive electrode (12).

2. Energy conversion cell according to Claim 1, **characterized in that** the positive electrode (12) comprises a contact layer (18) and a self-supporting electrically conductive layer (20).

3. Energy conversion cell according to Claim 2, **characterized in that** the self-supporting layer (20) of the positive electrode (12) comprises a protective layer (22).

4. Energy conversion cell according to Claim 2 or 3, **characterized in that** the self-supporting layer (20) of the positive electrode (12) comprises a porous metallic body (24).

5. Energy conversion cell according to Claim 2 or 3, **characterized in that** the self-supporting layer (20) of the positive electrode (12) comprises a planar monolithic metallic body (26).

6. Energy conversion cell according to any one of the preceding claims, **characterized in that** the self-supporting substrate (16) and the functional layers (18) are firmly bonded to each other.

7. Energy conversion cell according to any one of the preceding claims, **characterized in that** the self-supporting substrate (16) and the functional layers (28) as well as the self-supporting layer (20) are disposed on top of each other in a planar manner to form a multi-layer stack (38), **characterized in that** the multi-layer stack (38) at least partly comprises a circumferential groove (40).

8. Energy conversion cell according to any one of the preceding claims, **characterized in that** the porous metallic self-supporting substrate (16) of the negative electrode (14) consists of an iron-based alloy or a nickel-based alloy.

## Revendications

1. Elément (2) de transformation d'énergie ayant une unité (4) de transformation électrochimique, l'élément (2) de transformation d'énergie comprenant un côté (6) positif électriquement ayant une arrivée (8) de gaz de processus et un coté (10) négatif électriquement et, entre les deux côtés, est disposée l'unité (4) de transformation électrochimique, qui a un substrat autoportant et plusieurs couches (28) fonctionnelles, **caractérisé en ce que** l'unité (4) de transformation électrochimique a une électrode (12) positive et une électrode (14) négative et **en ce que** l'électrode (14) négative comprend un substrat (16) métallique poreux autoportant et **en ce que** l'unité (4) de transformation électrochimique a un composite de succession de couches, qui comprend, sur le substrat (16) métallique poreux autoportant, encore les couches (28) fonctionnelles suivantes dans l'ordre indiqué : une couche (30) fonctionnelle de l'électrode (14) négative, une couche (32) d'électrolyte, une couche (34) fonctionnelle de l'électrode (12) positive, la couche (18) de contact et la couche (20) conductrice de l'électricité et autoportante de l'électrode (12) positive, une couche (30) d'arrêt de diffusion étant disposée entre la couche (32) d'électrolyte et la couche (34) fonctionnelle de l'électrode (12) positive.

2. Elément de transformation d'énergie suivant la revendication 1, **caractérisé en ce que** l'électrode (12) positive comprend une couche (18) de contact et une couche (20) conductrice de l'électricité et autoportante.

3. Elément de transformation d'énergie suivant la revendication 2, **caractérisé en ce que** la couche (20) autoportante de l'électrode (12) positive a une couche (22) de protection.

4. Elément de transformation d'énergie suivant la revendication 2 ou 3, **caractérisé en ce que** la couche (20) autoportante de l'électrode (12) positive comprend un corps (24) métallique poreux.

5. Elément de transformation d'énergie suivant la revendication 2 ou 3, **caractérisé en ce que** la couche (20) autoportante de l'électrode (12) positive comprend un corps (26) métallique monolithique en nappe

6. Elément de transformation d'énergie suivant l'une des revendications précédentes, **caractérisé en ce que** le substrat (16) autoportant et les couches (18) fonctionnelles sont reliés les uns aux autres à coopération de matière.

7. Elément de transformation d'énergie suivant l'une des revendications précédentes, **caractérisé en ce que** le substrat (16) autoportant et les couches (28) fonctionnelles ainsi que la couche (20) autoportante sont superposés en nappe en un empilement (38) à plusieurs strates, **caractérisé en ce que** l'empilement (38) à plusieurs strates a, au moins en partie, une rainure (40) faisant le tour.

8. Elément de transformation d'énergie suivant l'une des revendications précédentes, **caractérisé en ce que** le substrat (16) métallique poreux et autoportant de l'électrode (14) négative est en un alliage à base de fer ou en un alliage à base de nickel.
